# EUROPÄISCHE PATENTSCHRIFT

(11) **EP 1 298 989 B1**
(45) Veröffentlichungstag und Bekanntmachung des Hinweises auf die Patenterteilung: **21.01.2004**
(21) Anmeldenummer: 01965122.3
(22) Anmeldetag: 12.07.2001
(51) Int. Cl.: A01L 3/06, A01L 9/00

(54) **HILFSMITTEL SOWIE VERFAHREN ZUR ERHÖHUNG EINER KLAUE EINES TIERES**
DEVICE AND METHOD FOR RAISING AN ANIMAL'S HOOF
ACCESSOIRE ET PROCEDE PERMETTANT DE HAUSSER LE SABOT D'UN ANIMAL

(30) Priorität: 12.07.2000 DE 10033822
(43) Veröffentlichungstag der Anmeldung: 09.04.2003
(73) Patentinhaber: Demel, Siegfried, 61130 Nidderau (DE); Reiss, Siegfried, 61191 Rosbach (DE)
(72) Erfinder: REISS, Siegfried, 61191 Rosbach (DE)
(74) Vertreter: Stoffregen, Hans-Herbert, Dr. Dipl.-Phys.
(86) Internationale Anmeldenummer: PCT/EP2001/008049
(87) Internationale Veröffentlichungsnummer: WO 2002/003796

(56) Entgegenhaltungen:
- FR-A- 2 641 942
- US-A- 5 272 857
- US-A- 6 056 062

## Beschreibung

Die Erfindung bezieht sich auf ein Hilfsmittel zur Erhöhung einer Klaue eines Tieres wie Rind umfassend einen unter der Klaue zu befestigenden Klotz, der mit der Klaue über ein Verbindungsmittel wie Ein- oder Mehrkomponentenkleber verbindbar ist. Ferner bezieht sich die Erfindung auf ein Verfahren zur Erhöhung einer Klaue eines Tieres wie Rind durch Befestigen eines Klotzes an der Klaue mittels eines Klebers.

Stallhaltung, Ernährung und Hochleistungszüchtung führen häufig dazu, dass Tiere an den Klauen erkranken. Die Folge ist Lahmheit, die insbesondere bei Milchkühen dazu führt, dass die hohe Milchleistung nachlässt. Lahmheit führt zu Schmerzen bei den Tieren und zu bedeutenden wirtschaftlichen Verlusten durch Einbußen bei der Milchleistung und durch Gewichtsverluste der Tiere bei den Tierhaltern.

Als überaus schnelle und wirksame Methode für Schmerzlinderung und Heilungsförderung bei Lahmheit hat sich die Druckentlastung der erkrankten Klaue durch das Anbringen eines Klötzchens unter der gesunden Klaue erwiesen. Dabei beruhen die bisherigen Klauenbehandlungssysteme grundsätzlich auf folgenden Prinzipien. Bei der ältesten Methode handelt es sich um Eisenbeschläge, die jedoch heutzutage kaum mehr eingesetzt werden, da die Herstellung teuer und die Verarbeitung zu aufwendig ist. Ferner sind Gummiklötzchen bekannt, die mit einem Einkomponentenkleber (Cyanacrylat) an der Klaue befestigt werden, vgl. z.B. die Druckschrift US-A-6 056 062.

Auch besteht die Möglichkeit, die Gummiklötzchen zu nageln. Dies ist jedoch problematisch und kann häufig zu Verletzungen an der gesunden Klaue führen. Zur Behandlung von zwei kranken Klauen gelangen Kunststoffschuhe zum Einsatz, die durch Bänder, Gurte oder Schnüre am Fuß befestigt werden. Allerdings ist die Bedeutung entsprechender Kunststoffschuhe nachlassend, da die gewünschten Resultate kaum erzielbar sind. Am Weitesten verbreitet ist das Befestigen von Holzklötzchen, die - wie Gummiklötzchen und Kunststoffschuhe - mittels Reaktionsklebstoffen befestigt werden, bei denen es sich um Ein- oder Mehrkomponentensysteme handeln kann.

Übliche Einkomponentensysteme beruhen auf Cyanacrylat-Basis, die den Vorteil zeigen, dass eine schnelle Aushärtung erfolgt. Allerdings ist ein sauberes Arbeiten erforderlich. Auch ist ein Ausgleich von Unebenheiten nicht möglich, so dass bei unebenen Klauenflächen und/oder bei Feuchtigkeit eine unzureichende bzw. mangelnde Haftung erfolgt. Ferner kann das Klebstoffmaterial dem Grunde nach nicht verformt werden.

Als Mehrkomponentenreaktionsklebstoffe gelangen solche zur Anwendung, die aus einem Pulver-Flüssigkeits-System, vorzugsweise auf Polyester oder Polymethylmethacrylat-Basis bestehen können. Entsprechende Pulver-Flüssigkeits-Systeme zeigen eine lange Lagerzeit, gleichwenn wegen der Entflammbarkeit besondere Vorkehrungen zu treffen sind, eine schnelle Aushärtung, einen guten Ausgleich von Unebenheiten sowie eine gute Haftung. Allerdings ist ein Anmischen erforderlich, da das System aus zwei Komponenten besteht. Bei tiefen Temperaturen ergibt sich dabei ein Aushärteproblem.

Als weiteres Zweikomponentensystem kommen solche auf der Basis Flüssigkeit-Flüssigkeit und/oder Paste-Paste zur Anwendung, die auf der Grundlage von Epoxid, Acrylat (Methacrylat), Polyester oder Polyurethan aufgebaut sein können. Vorteilhaft ist ebenfalls eine schnelle Aushärtung und eine gute Haftung. Allerdings ist eine aufwendige Verarbeitung erforderlich, so dass die Systeme häufig nur in Zweikammer-Kartuschen mit speziellen Mischköpfen und Auspressgeräten zur Verfügung gestellt werden. Dabei kann dann, wenn Polyurethansysteme angeboten werden, auch bei tiefen Temperaturen gearbeitet werden, d.h. der Kleber härtet aus. Allerdings sind Nachteile in Bezug auf die begrenzte Lagerstabilität - meistens nur sechs Monate - sowie die schlechte Modellierbarkeit gegeben.

Ein weiteres Zweikomponentensystem ist das sogenannte NO MIX-Verfahren, bei dem eine Komponente auf die Klaue oder den Huf und die andere auf den Klotz aufgetragen werden. So ist kein Mischen erforderlich. Vielmehr erfolgt durch Druckeinwirkung die erforderliche Verbindung. Nachteilig ist jedoch, dass die Schicht nur im Millimeterbereich aufgetragen werden kann, so dass ein Ausgleich von Unebenheiten nicht möglich ist.

Der vorliegenden Erfindung liegt das Problem zugrunde, ein Hilfsmittel zur Erhöhung einer Klaue eines Tieres sowie ein Verfahren hierfür zur Verfügung zu stellen, das eine problemlose und einfache Befestigung des Klotzes an der Klaue ermöglicht, wobei Unebenheiten problemlos ausgeglichen werden können. Gleichzeitig sollen die Vorteile sowohl der Ein- als auch der Mehrkomponentenklebersysteme erreichbar sein, ohne deren Nachteile zu übernehmen.

Erfindungsgemäß wird das Problem durch ein Hilfsmittel der eingangs genannten Art im Wesentlichen dadurch gelöst, dass auf klauenseitiger Fläche des Klotzes ein poröses mit einem Reaktionskleber oder einer Komponente eines solchen versehenes oder aus einem solchen bestehendes Material zur Bildung des Verbindungsmittels vorgesehen ist. Dabei ist das poröse und insbesondere aushärtbare Material vorzugsweise ein auf dem Klotz angeordneter Träger wie Schicht, der bzw. die mit dem Klotz verbunden ist. Auch kann das poröse aushärtbare Material auf klotzseitiger Fläche des Klotzes ausgebildet sein. Des Weiteren ist vorgesehen, dass das poröse aushärtbare Material saugfähig ist und mit einer Komponente eines Zwei- oder Mehrkomponentenklebers versehen wie imprägniert ist oder aus dieser besteht.

Alternativ besteht auch die Möglichkeit, dass das poröse Material mit einem Einkomponenten-Klebermaterial insbesondere auf Cyanacrylat-Basis und/oder mit einem mikroverkapselten und/oder durch Strahlung härtenden Klebstoff imprägniert ist.

Bevorzugterweise ist das poröse aushärtende Material eine Schaumstoffschicht oder ein Abschnitt einer solchen und/oder besteht aus einem vliesähnlichen saugfähigen Material wie Filterpapier und/oder aus einem stoffähnlichen Material wie Textilien und/oder aus gepresstem Material wie Zellstoff und/oder Glasfasern.

Insbesondere ist das poröse aushärtende Material ein Abschnitt eines Schaumstoffs mit geschlossenen und/oder offenen Poren, wobei die Dicke des Schaumstoffes im Bereich zwischen 0,1 mm und 30 mm, insbesondere jedoch im Bereich zwischen 3 mm und 10 mm liegen sollte. Das Schaumstoffmaterial selbst sollte eine Porengröße von 0,01 mm bis 5 mm, insbesondere zwischen 0,1 mm und 2 mm aufweisen.

Durch die erfindungsgemäße Lehre wird die Möglichkeit geschaffen, auf einfache Weise einen Klotz wie Holzklötzchen mit einer Klaue eines Tieres wie insbesondere Rind zu verbinden. Dabei wird auch dann, wenn der Kleber ein Mehrkomponentenkleber ist, der Vorteil des Einkomponentensystems genutzt, da das ansonsten bei Zweikomponentenkleber erforderliche vom Nutzer vorzunehmende innige Durchmischen der Komponenten nicht erforderlich ist. Hierzu ist vorgesehen, dass auf der mit der Klaue zu verbindenden Fläche des Klotzes ein Träger aufgebracht wird, der aus dem porösen, saugfähigen und aushärtenden Material besteht und insbesondere mit einer ersten Komponenten imprägniert ist. Dabei kann der Träger herstellungsseitig fest mit dem Klotz verbunden sein oder als separates Teil geliefert werden. Der die erste Komponente enthaltende Träger ist saugfähig, so dass die zweite Komponente des Klebers problemlos aufgenommen werden kann. Bei der zweiten Komponente handelt es sich vorzugsweise um eine flüssige oder pastöse Komponente. Aufgrund der großen Oberfläche des porösen aushärtenden Materials erübrigt sich ein Mischen der zweiten Komponenten mit der ersten.

Der Träger, d. h. das poröse aushärtende Material kann erwähntermaßen aus unterschiedlichen, ausreichend saugfähigen Materialien bestehen. Dabei bietet sich aus Kostengründen ein handelsüblicher Kunststoffschaum an, der mit der ersten Komponente imprägniert ist oder vor Ort imprägniert wird. Auch kann als saugfähiges Material ein die erste Komponente enthaltendes offenporiges Kissen oder ein Tampon verwendet werden.

Aufgrund der erfindungsgemäßen Lehre und insbesondere der Verwendung des porösen aushärtenden Materials, der eine Trägerfunktion ausübt, können unterschiedliche Klebstoffsysteme, sogar Einkomponentensysteme wie Cyanacrylat oder mikroverkapselte Einkomponentensysteme, die unter Luftabschluss bzw. Druck in bisher nur dünnen Schichten aushärten, durch die große Oberfläche des Materials, die durch die Porenstruktur erzielt werden, auch in dickeren Schichten aushärten. Ferner ist ohne Weiteres die Möglichkeit gegeben, Einkomponentenmaterialien durch Ultraschall, Hochfrequenzstrahlung, elektromagnetische Strahlung wie Licht oder Mikrowellen auszuhärten.

Der poröse Träger kann verfahrenstechnisch zum Beispiel durch Stanzen und/oder Schneiden in jeder gewünschten Form zur Verfügung gestellt werden, so dass eine gezielte Befestigung des anzuklebenden Teils gegeben ist. Hierdurch ist der Vorteil gegeben, dass der Träger nur in den Bereichen eine Verbindung zwischen der Klaue und dem Klotz herstellt, in denen die übliche Bewegungsfreiheit bzw. der Bewegungsablauf der Tiere wie Rinder nicht beeinträchtigt wird. Insbesondere kann problemlos der weiche und empfindliche Ballenbereich des Fußes während einer Klauenbehandlung frei beweglich erhalten bleiben, ohne dass eine Beeinträchtigung durch Kunststoff oder Kleber gegeben ist, wie dies nach dem Stand der Technik in Kauf genommen werden muss, es sei denn, der Kunststoff oder Kleber wird in gewünschten Bereichen entfernt. Dies erfolgt vor dem Aushärten mit einem Spachtel oder ähnlichen Hilfsmitteln. Wird dies nicht fachgerecht durchgeführt, entstehen erhebliche Nachteile.

Mit anderen Worten wird aufgrund der erfindungsgemäßen Lehre die Möglichkeit geschaffen, beliebig angepasste Geometrien des porösen Materials, also des Trägers, über den der Klotz mit der Klaue verbunden wird, vorzugeben, so dass eine anatomisch optimale Befestigung des Klotzes gegeben ist.

Ebenfalls ist es möglich, Aussparungen auf der klauenseitigen Fläche des porösen Materials auszubilden, um druckgefährdete Bereiche zu schützen oder zu entlasten. Ferner können Hohlräume geschaffen werden, um in diese heilungsfördernde Wirkstoffe oder Medikamente einzubringen, die eine Langzeitwirkung haben.

Ein Verfahren zur Erhöhung einer Klaue eines Tieres wie Rind durch Befestigung eines Klotzes an der Klaue zeichnet sich durch die Verfahrensschritte aus:
- Befestigung eines porösen Materials gewünschter flächiger Erstreckung auf dem Klotz, wobei das Material vor oder nach der Befestigung an dem Klotz mit einer ersten Komponente eines Reaktionsklebers versehen worden ist,
- Versehen des die erste Komponente aufweisenden Materials mit einer zweiten Komponente des Klebers,
- Andrücken des Klotzes mit dem die erste und zweite Komponente enthaltenden Material an die Klaue und
- Aushärten des Klebers zum Verbinden des Klotzes mit der Klaue.

Alternativ besteht die Möglichkeit des Befestigens eines porösen Materials gewünschter flächiger Erstreckung auf dem Klotz, wobei das Material vor oder nach dem Befestigen auf dem Klotz mit einem Einkomponentenklebstoffmaterial versehen worden ist, Andrücken des Klotzes an die Klaue und Aushärten des Einkomponentenklebstoffes zum Verbinden des Klotzes mit der Klaue. Dabei kann das Aushärten durch Ultraschall, Hochfrequenzstrahlung, elektromagnetische Strahlung wie Licht oder Mikrowellenstrahlung erfolgen und/oder unterstützt werden.

Insbesondere wird ein Zweikomponentenkleber auf Urethan-, Acrylat/Methacrylat-, Polyester-, Acrylsäure- und/oder Epoxidharz-Basis benutzt.

Das poröse Material ist insbesondere mit einem Peroxid und/oder einer substituierten Barbitursäure, vorzugsweise Dibenzoylperoxid und/oder eine 5-substituierte Barbitursäure imprägniert.

Die polymerisierende Komponente selbst kann Reaktionsbeschleuniger wie Amine oder Quartanäre Ammoniumsalze, Metall-Ionen, vorzugsweise Para-Toluidine, Kupfer/-Kobalt-Ionen und Quartanäre Ammoniumchloride enthalten.

Nach einem weiteren Vorschlag ist vorgesehen, dass als polymerisierende Komponente ein Monomer auf der Basis von Polyester und/oder Acrylat/Methacrylat, vorzugsweise Styrol bzw. Methyl-, Ethyl-, n-Alkyl-methacrylat und/oder Hydroxy(-ethyl-, propyl-, n-alkyl)-Methacrylat/Acrylat und/oder Di-Tri-Tetra-methacrylaten/Acrylaten benutzt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: Abschnitte von Läufen eines Tieres,
- Fig. 2: ein Klauenpaar, von denen eines erhöht ist,
- Fig. 3: eine Prinzipdarstellung eines Hilfsmittels umfassend einen mit einer zu erhöhenden Klaue zu verbindenden Klotz,
- Fig. 4: eine Unteransicht eines Fußes eines Tieres,
- Fig. 5: eine Seitenansicht des Fußes nach Fig. 4 mit zu dessen Erhöhung verbundenem Klotz,
- Fig. 6: eine Prinzipdarstellung eines Klotzes mit auf diesem aufgebrachten Träger und
- Fig. 7: eine alternative Ausbildung eines auf einem Klotz aufgebrachten Trägers.

Insbesondere durch Stallhaltung, Ernährung sowie Hochleistungszüchtung bedingt ist im verstärkten Umfang festzustellen, dass Klauen eines Tieres erkranken. Dies führt zu einer Lahmheit. Um die Schmerzen zu lindern und gleichzeitig die Heilung zu fördern, ist es bekannt, die erkrankte Klaue zu entlasten. Sofern eine der Klauen eines Klauenpaares gesund ist, kann diese mittels eines Klotzes erhöht werden.

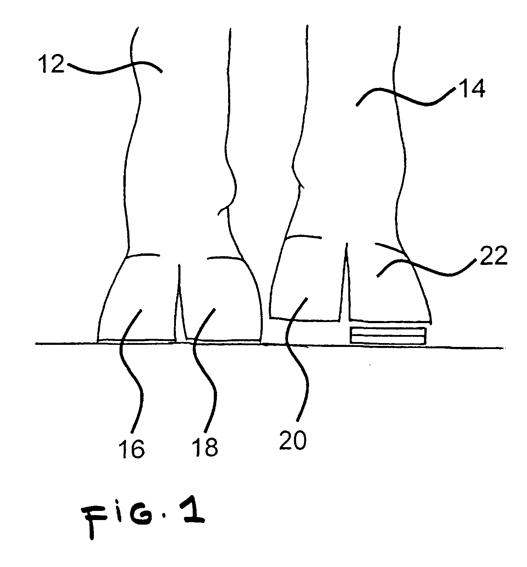

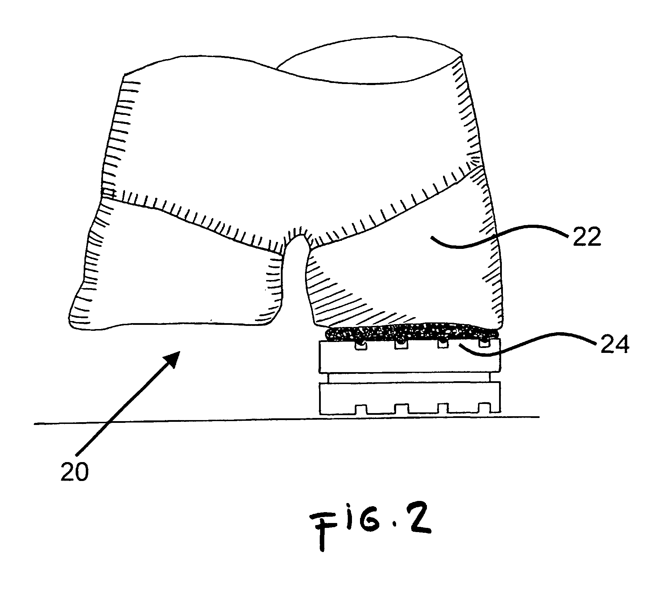

In Fig. 1 sind rein beispielhaft Abschnitte von Läufen 12, 14 eines Tieres wie insbesondere Rind dargestellt, von dessen Klauen 16, 18, 20, 22 eine erkrankt ist, und zwar die Klaue 20. Um diese zu entlasten wird unter die benachbarte gesunde Klaue 22 erwähntermaßen ein Klotz 24 befestigt, wodurch eine Druckentlastung der erkrankten Klaue 20 erfolgt, wie durch die Fig. 2 rein prinzipiell dargestellt wird.

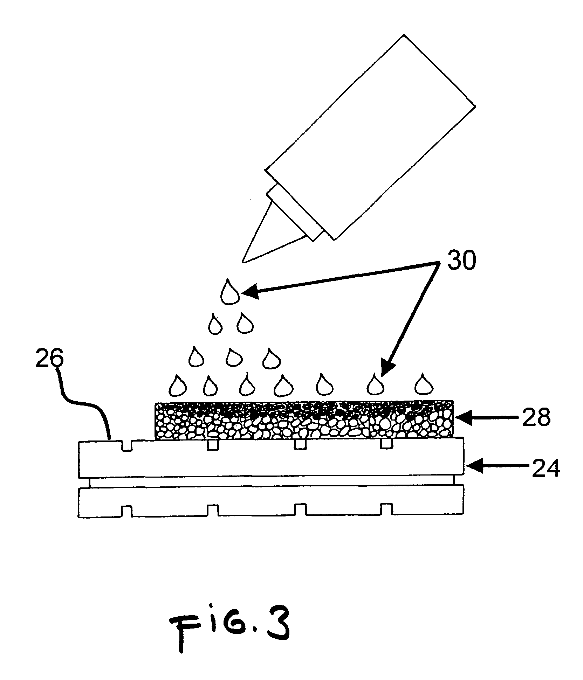

Erfindungsgemäß ist hierzu vorgesehen, dass auf der klauenseitigen Fläche 26 des Klotzes 24 ein poröses Material aufgebracht wird, das im Ausführungsbeispiel der Fig. 3 als Plattenelement 28 ausgebildet ist. Dieses Plattenelement 28, das auch als Träger zu bezeichnen ist, weist eine erste Komponente eines Reaktionsklebers wie Mehrkomponentenklebers auf. Durch die poröse Ausbildung des Plattenelementes 28 ergibt sich eine große Oberfläche, so dass dann, wenn der Klotz 24 mittels des Plattenelementes oder dem Träger mit der Klaue 22 verbunden werden soll, es nur noch erforderlich ist, dass auf das Plattenelement 28 bzw. dem Träger die zum Aushärten erforderliche weitere bzw. weiteren Komponenten aufgegeben werden, die im Ausführungsbeispiel das Bezugszeichen 30 tragen. Durch die erwähntermaßen große Oberfläche des porösen Trägers 28 erfolgt beim Eindringen der Komponente bzw. Komponenten 30 in den Träger 28 ein automatisches "Vermischen" der Komponenten, so dass dann, wenn der Klotz 24 mit dem die Komponenten enthaltenden Träger 28 auf die Klaue 22 gedrückt wird, durch Aushärten des Klebers der Klotz 24 mit der Klaue 22 haftend verbunden wird. Gleichzeitig härtet der poröse Träger 28, bei dem es sich beispielhaft um Schaumstoffmaterial handeln kann, im erforderlichen Umfang aus, so dass sich eine starre Einheit aus Klotz 24 und Träger 28 ergibt, die mit der Klaue 22 verbunden ist.

Der Träger 28 kann als vorgefertigte Einheit mit dem Klotz 24 zur Verfügung gestellt werden. Alternativ besteht die Möglichkeit, Klotz 24 und Träger 28 getrennt anzubieten, so dass diese sodann dem Anwendungsfall entsprechend miteinander verbunden werden können.

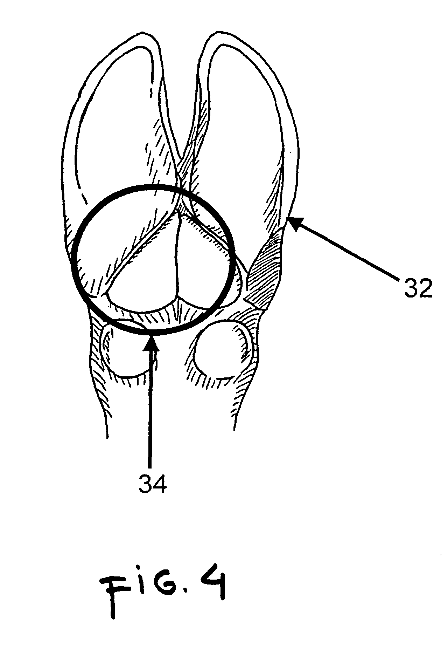

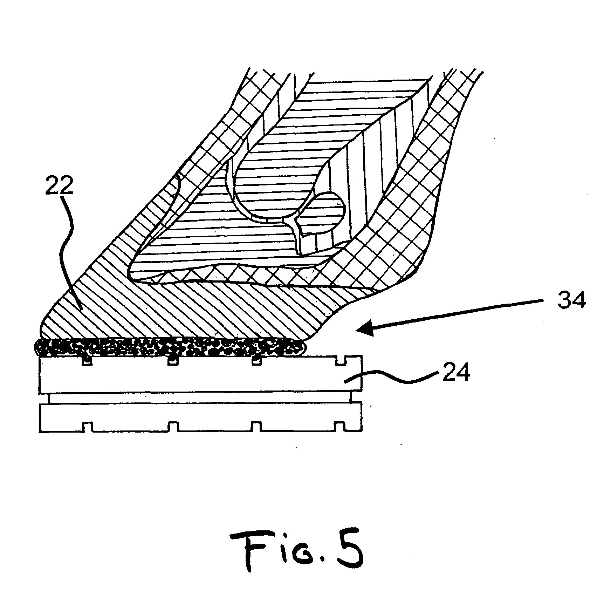

Das poröse Material, also der Träger 28, kann als vorgefertigtes Teil wie Platte, Strip oder ähnliches zur Verfügung gestellt werden, das gegebenenfalls schneidbar bzw. stanzbar ist, um gezielt in vorgegebenen Bereichen der Klaue 22 diese mit dem Klotz 24 zu verbinden. Hierdurch ergibt sich der Vorteil, dass empfindliche Bereiche des Fußes 32, insbesondere im Ballenbereich 34 freibleiben, so dass die übliche Bewegungsfreiheit und der Bewegungsablauf des Tieres nicht gestört werden. Dies wird anhand der Fig. 4 und 5 verdeutlicht. Man erkennt, dass der Ballenbereich 34 unbedeckt ist, so dass der Klotz 24, insbesondere Holzklotz außerhalb des Ballenbereichs 34 über den Träger 28 bzw. den Kleber mit der Klaue 22 verbunden ist.

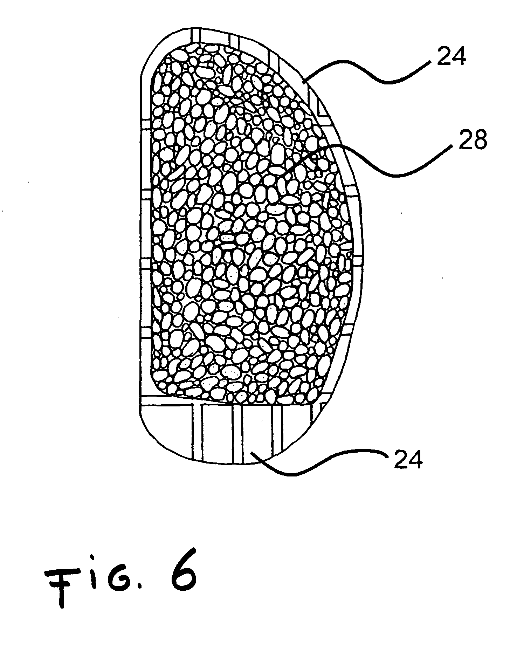

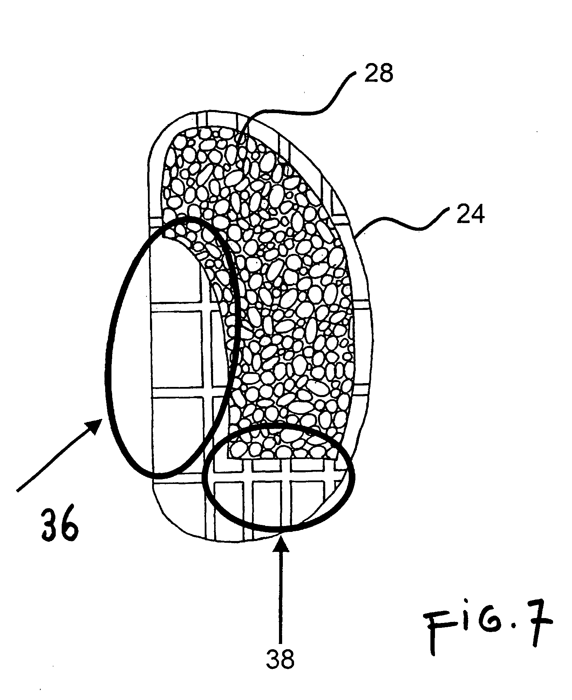

Somit ergibt sich die Möglichkeit einer anatomisch optimalen Befestigung des Klotzes 24 an der Klaue 22. Hierzu ist es nur erforderlich, dass der poröse Träger 28 in vorgegebenen Bereichen entfernt wird, wie ein Vergleich der Fig. 6 und 7 zeigt. So sind in Fig. 7 Bereiche 36, 38 von dem Träger 28 entfernt, die möglicherweise andernfalls zu einer Behinderung des Bewegungsablaufs führen könnten.

Des Weiteren besteht die Möglichkeit, in den Träger 28 heilungsfördernde Wirkstoffe bzw. Medikamente einzubringen. Hierzu können Hohlräume vorgesehen werden, aus denen langzeitwirkend der Wirkstoff bzw. das Medikament abgegeben wird.

Ist die Erfindung anhand eines Mehrkomponentenklebers erläutert worden, mit dem der Träger 28 mit einer Komponente imprägniert wird und vor dem Verarbeiten, d.h. dem Verbinden des Klotzes 24 mit der Klaue 22 der Träger 28, der saugfähig ist, mit einer zweiten bzw. mit den erforderlichen Komponenten wie Flüssigkeit oder Paste gesättig, um die Aushärtung und damit die Verbindung zwischen dem Klotz 24 und der Klaue 22 herzustellen, so besteht ohne Weiteres auch die Möglichkeit, dass die Aushärtung durch einen in dem Träger 28 vorhandenen "ruhenden Katalysator" initiiert wird, der zum Beispiel durch Druck, Luftabschluss oder durch Wellen oder Strahlung aktiviert wird.

Ohne die Erfindung zu verlassen besteht auch die Möglichkeit, den Träger 28 selbst aus einer der Komponenten des Klebers auszubilden. Gegebenenfalls kann auch eine Verbindung über einen Einkomponentenkleber vorzugsweise auf Cyanacrylat-Basis erfolgen, wobei der Träger 28 entweder selbst aus dem Einkomponentenmaterial besteht oder mit diesem imprägniert ist. Auch bei der Verwendung eines Mehrkomponentenklebers kann der Träger 28 selbst aus einer Komponente hergestellt sein. Wichtig ist allein, dass der Träger hinreichend porös und somit saugfähig ist, um beim Hinzufügen der weiteren Komponente bzw. Komponenten das erforderliche scheinbare Durchmischen der Komponenten mit dem Ergebnis erfolgt, dass ein Aushärten und somit eine Verbindung zwischen dem Klotz 24 und der Klaue 22 ermöglicht wird.

Das poröse Material, das erwähntermaßen aus Gründen der Vereinfachung als Träger 28 bezeichnet ist, besteht vorzugsweise aus einem Schaumstoffmaterial mit geschlossenen oder offenen Poren, wobei der Schaumstoff eine Schichtdicke von 0,1 mm bis 30 mm, vorzugsweise 3 mm bis 100 mm aufweist. Die Porengröße selbst kann zwischen 0,01 mm und 5 mm, insbesondere zwischen 0,1 mm und 2 mm liegen, ohne hierdurch eine Einschränkung der Erfindung vomehmen zu wollen.

Als Klebermaterial kann insbesondere ein Zweikomponentenkleber auf Urethan-, Acrylat/Methacrylat-, Polyester-, Acrylsäure- und/oder Epoxidharz-Basis benutzt werden.

Als Imprägnierkomponente ist zu bevorzugen eine Peroxid und/oder einer substituierten Barbitursäure, vorzugsweise Dibenzoylperoxid und/oder eine 5-substituierte Barbitursäure.

Auch kann die zur ersten Komponente, die auch als Imprägnierkomponente bezeichnet werden kann, passende polymerisierende Gegenkomponente einen Reaktionsbeschleuniger wie Amine oder Quartanäre Ammoniumsalze, Metall-Ionen, vorzugsweise Para-Toluidine, Kupfer/Kobalt-Ionen und Quartanäre Ammoniumchloride enthalten.

Die polymerisierende Komponente selbst sollte ein Monomer auf der Basis von Polyester und/oder Acrylat/Methacrylat, vorzugsweise Styrol bzw. Methyl-, Ethyl-, n-Alkyl-methacrylat und/oder Hydroxy(-ethyl-, propyl-, n-alkyl)-Methacrylat/Acrylat und/oder Di-Tri-Tetra-methacrylaten/Acrylaten sein.

Das poröse Material 28 besteht folglich aus einer Gegenkomponente eines Reaktionsklebstoffs allein und/oder aus einem Reaktionspartner für eine weitere Klebstoffkomponente.

Sofern erwähntermaßen das poröse Material mit einem sogenannten Einkomponentenmaterial imprägniert ist oder aus einem solchen besteht, ist vorzugsweise Cyanacrylatbasis zu wählen. Auch besteht die Möglichkeit, das poröse Material mit einem mikroverkapselten und/oder durch Strahlen bzw. Wellen auszuhärtenden Klebstoff zu imprägnieren.

Das poröse Material selbst sollte saugfähig sein und kann aus vliesähnlichem Material wie zum Beispiel Filterpapier oder stoffähnlichem Material wie Textil bestehen. Alternativ kann das saugfähige Trägermaterial aus Materialien mit Kapillarwirkung wie zum Beispiel Hohlfasern aufgebaut sein. Das saugfähige Material kann aber auch aus gepressten Materialien wie zum Beispiel Zellstoff, Glasfasern oder sonstigen Fasern bestehen. Ferner kann eine saugfähige, pulvrige oder granulatartige Komponente eines Mehrkomponentenklebers als Kissen oder Tampon ausgebildet sein, das bzw. der auf dem Klotz befestigt wird und sodann mit der bzw. den weiteren Komponenten benetzt bzw. getränkt wird.

## Patentansprüche

1. Hilfsmittel zur Erhöhung einer Klaue (22) eines Tieres wie Rind umfassend einen an der Klaue zu befestigenden Klotz (24) wie Holzklotz, der mit der Klaue über ein Verbindungsmittel wie Ein- oder Mehrkomponentenkleber verbindbar ist,
**dadurch gekennzeichnet,**
**dass** auf klauenseitiger Fläche (26) des Klotzes (24) ein poröses mit einem Reaktionskleber oder einer Komponenten eines solchen versehenes oder aus einem solchen bestehendes Material zur Bildung des Verbindungsmittels zwischen dem Klotz (24) und der Klaue (22) vorgesehen ist.

2. Hilfsmittel nach Anspruch 1,
**dadurch gekennzeichnet,**
**dass** das poröse Material saugfähig ist.

3. Hilfsmittel nach Anspruch 1 oder 2 ,
**dadurch gekennzeichnet,**
**dass** das poröse Material aushärtend ist.

4. Hilfsmittel nach zumindest einem der vorhergehenden Ansprüche,
**dadurch gekennzeichnet,**
**dass** das poröse Material mit dem Klotz (24) verbunden ist.

5. Hilfsmittel nach zumindest einem der vorhergehenden Ansprüche,
**dadurch gekennzeichnet,**
**dass** das poröse Material auf klauenseitiger Fläche (26) des Klotzes (24) ausgebildet ist.

6. Hilfsmittel nach zumindest einem der vorhergehenden Ansprüche,
**dadurch gekennzeichnet,**
**dass** das poröse Material wie Träger (28) mit einer Komponente eines Zwei- oder Mehrkomponentenklebers versehen wie imprägniert ist oder aus dieser besteht.

7. Hilfsmittel nach zumindest einem der vorhergehenden Ansprüche,
**dadurch gekennzeichnet,**
**dass** das poröse Material mit einem Einkomponentenklebermaterial insbesondere aus Cyanacrylat-Basis versehen wie imprägniert ist oder aus diesem besteht.

8. Hilfsmittel nach zumindest einem der vorhergehenden Ansprüche,
**dadurch gekennzeichnet,**
**dass** das poröse Material Schaumstoffmaterial und/oder Fliesmaterial und/oder Textilmaterial ist oder solches enthält.

9. Hilfsmittel nach zumindest einem der vorhergehenden Ansprüche,
**dadurch gekennzeichnet,**
**dass** das poröse Material durch ein Kissen und/oder ein Tampon gebildet ist, das mit pulvrigem und/oder granulatartigem Material gefüllt ist, das mit der Einkomponente des Zwei- oder Mehrkomponentenklebers imprägniert ist oder aus dieser besteht.

10. Hilfsmittel nach zumindest einem der vorhergehenden Ansprüche,
**dadurch gekennzeichnet,**
**dass** das poröse Material einen einen gewünschten Klauenbereich abdeckenden Verlauf aufweist.

11. Hilfsmittel nach zumindest einem der vorhergehenden Ansprüche,
**dadurch gekennzeichnet,**
**dass** das poröse Material zumindest bereichsweise eine Aufnahme für medizinische Wirkstoffe aufweist.

12. Hilfsmittel nach zumindest einem der vorhergehenden Ansprüche,
**dadurch gekennzeichnet,**
**dass** das poröse Material aus einem Schaumstoff mit geschlossenen und/oder offenen Poren besteht.

13. Hilfsmittel nach zumindest einem der vorhergehenden Ansprüche,
**dadurch gekennzeichnet,**
**dass** das aus Schaumstoff bestehende poröse Material eine Dicke von 0,1 mm bis 30 mm, vorzugsweise 3 mm bis 10 mm aufweist.

14. Hilfsmittel nach zumindest einem der vorhergehenden Ansprüche,
**dadurch gekennzeichnet,**
**dass** der Schaumstoff eine Porengröße von 0,01 mm bis 5 mm, vorzugsweise 0,1 mm bis 2 mm aufweist.

15. Hilfsmittel nach zumindest einem der vorhergehenden Ansprüche,
**dadurch gekennzeichnet,**
**dass** das Klebermaterial ein Zweikomponentenkleber auf Urethan-, Acrylat/Methacrylat-, Polyester-, Acrylsäure- und/oder Epoxidharz-Basis ist.

16. Hilfsmittel nach zumindest einem der vorhergehenden Ansprüche,
**dadurch gekennzeichnet,**
**dass** das poröse Material mit einem Peroxid und/oder einer substituierten Barbitursäure, vorzugsweise Dibenzoylperoxid und/oder eine 5-substituierte Barbitursäure imprägniert ist.

17. Hilfsmittel nach zumindest einem der vorhergehenden Ansprüche,
**dadurch gekennzeichnet,**
**dass** zum Aushärten des Klebers dem porösen Material zuzugebende polymerisierende Komponente einen Reaktionsbeschleuniger wie Amine oder Quartanäre Ammoniumsalze, Metall-Ionen, vorzugsweise Para-Toluidine, Kupfer/Kobalt-Ionen und Quartanäre Ammoniumchloride enthält.

18. Hilfsmittel nach zumindest einem der vorhergehenden Ansprüche,
**dadurch gekennzeichnet,**
**dass** polymerisierende Komponente ein Monomer auf der Basis von Polyester und/oder Acrylat/Methacrylat, vorzugsweise Styrol bzw. Methyl-, Ethyl-, n-Alkyl-methacrylat und/oder Hydroxy(-ethyl-, propyl-, n-alkyl)-Methacrylat/-Acrylat und/oder Di-Tri-Tetra-methacrylaten/Acrylaten ist.

19. Hilfsmittel nach zumindest einem der vorhergehenden Ansprüche,
**dadurch gekennzeichnet,**
**dass** das poröse Material aus einer Gegenkomponente eines Reaktionsklebstoffs besteht.

20. Hilfsmittel nach zumindest einem der vorhergehenden Ansprüche,
**dadurch gekennzeichnet,**
**dass** das poröse Material aus einem Reaktionspartner einer weiteren Komponenten des Klebers besteht.

21. Hilfsmittel nach zumindest einem der vorhergehenden Ansprüche,
**dadurch gekennzeichnet,**
**dass** das poröse Material mit einem Einkomponentenmaterial, vorzugsweise auf Cyanacrylat-Basis und/oder mit einem mikroverkapselten- und/oder durch Strahlung aushärtenden Klebstoff imprägniert ist.

22. Hilfsmittel nach zumindest einem der vorhergehenden Ansprüche,
**dadurch gekennzeichnet,**
**dass** das poröse Material aus stoffähnlichem Material besteht.

23. Hilfsmittel nach zumindest einem der vorhergehenden Ansprüche,
**dadurch gekennzeichnet,**
**dass** das poröse Material aus Materialien mit Kapillarwirkung wie zum Beispiel Hohlfasem besteht.

24. Hilfsmittel nach zumindest einem der vorhergehenden Ansprüche,
**dadurch gekennzeichnet,**
**dass** das poröse Material aus gepressten Materialien wie zum Beispiel Zellstoff, Glasfasern oder sonstigen Fasern besteht.

25. Verfahren zur Erhöhung einer Klaue (22) eines Tieres wie Rind durch Befestigen eines Klotzes (24) an der Klaue **gekennzeichnet durch** die Verfahrensschritte:
- Befestigung eines porösen Materials gewünschter flächiger Erstreckung auf dem Klotz (24), wobei das Material vor oder nach der Befestigung an dem Klotz mit einer ersten Komponente eines aushärtenden Mehrkomponentenklebers versehen worden ist,
- Versehen des die erste Komponente aufweisenden Materials mit einer zumindest zweiten Komponente (30) des Klebers,
- Andrücken des Klotzes mit dem die Komponenten enthaltenden Material an die Klaue (22) und
- Aushärten des Klebers zum Verbinden des Klotzes mit der Klaue.

26. Verfahren zur Erhöhung einer Klaue (22) eines Tieres wie Rind durch Befestigen eines Klotzes (24) an der Klaue **gekennzeichnet durch** die Verfahrensschritte:
- Befestigen eines porösen Materials gewünschter flächiger Erstreckung auf dem Klotz (24), wobei das Material vor oder nach dem Befestigen auf dem Klotz mit einem Einkomponentenklebstoffmaterial versehen worden ist,
- Andrücken des Klotzes mit dem Klebstoffmaterial enthaltenden Material an die Klaue (22) und
- Aushärten des Klebers zum Verbinden des Klotzes mit der Klaue.

27. Verfahren nach Anspruch 25 oder 26,
**dadurch gekennzeichnet,**
**dass** das Aushärten durch Ultraschall, Hochfrequenzstrahlung, elektromagnetischer Strahlung wie Licht und/oder Mikrowellenstrahlung erfolgt und/oder unterstützt wird.

## Claims

1. Device for raising a hoof (22) of an animal, such as a cow, comprising a block (24), such as a wood block, to be fastened to the hoof, which can be connected with the hoof by a connecting medium such as single- or multi-component adhesive,
**characterized therein,**
that a porous material having a reactive adhesive or being provided with a component thereof or consisting thereof to form the connecting medium between the block (24) and the hoof (22) is provided on the hoof-side surface (26) of the block (24).

2. Device according to claim 1,
**characterized therein,**
that the porous material is absorbent.

3. Device according to claim 1 or 2,
**characterized therein,**
that the porous material is hardening.

4. Device according to at least one of the preceding claims,
**characterized therein,**
that the porous material is connected with the block (24).

5. Device according to at least one of the preceding claims,
**characterized therein,**
that the porous material is formed on the hoof-side surface (26) of the block (24).

6. Device according to at least one of the preceding claims,
**characterized therein,**
that the porous material, such as substrate (28), is provided, e.g. impregnated, with a component of a two-component or multi-component adhesive or consists of said component.

7. Device according to at least one of the preceding claims,
**characterized therein,**
that the porous material is provided, e.g. impregnated, with a single-component adhesive material, in particular a cyanacrylate-based material, or consists of said material.

8. Device according to at least one of the preceding claims,
**characterized therein,**
that the porous material is a foam material and/or fleece material and/or textile material or contains said material.

9. Device according to at least one of the preceding claims,
**characterized therein,**
that the porous material is formed by a pad and/or a tampon which is filled with powdery and/or granular material which is impregnated with the single component of the two- or multi-component adhesive or consists thereof.

10. Device according to at least one of the preceding claims,
**characterized therein,**
that the porous material has a extent covering a desired hoof area.

11. Device according to at least one of the preceding claims,
**characterized therein,**
that the porous material has an intake, at least in certain areas, for active medical substances.

12. Device according to at least one of the preceding claims,
**characterized therein,**
that the porous material consists of a foam material with closed and/or open pores.

13. Device according to at least one of the preceding claims,
**characterized therein,**
that the porous material consisting of foam material has a thickness of 0.1 mm to 30 mm, preferably 3 mm to 10 mm.

14. Device according to at least one of the preceding claims,
**characterized therein,**
that the foam material has a pore size of 0.01 mm to 5 mm, preferably 0.1 mm to 2 mm.

15. Device according to at least one of the preceding claims,
**characterized therein,**
that the adhesive material is a two-component adhesive based on urethane, acrylate/methacrylate, polyester, acrylic acid and/or epoxy resin.

16. Device according to at least one of the preceding claims,
**characterized therein,**
that the porous material is impregnated with a peroxide and/or a substituted barbituric acid, preferably dibenzoyl peroxide and/or a 5-substituted barbituric acid.

17. Device according to at least one of the preceding claims,
**characterized therein,**
that a polymerizing component to be added to the porous material for hardening the adhesive contains an inductor such as amines or quaternary ammonium salts, metal ions, preferably paratoluidines, copper/cobalt ions and quarternary ammonium chlorides.

18. Device according to at least one of the preceding claims,
**characterized therein,**
that a polymerizing component is a monomer based on polyester and/or acrylate/methacrylate, preferably styrene or methyl-, ethyl-, n-alkyl-methacrylate and/or hydroxy(-ethyl-, propyl-,n-alkyl)-methacrylate/acrylate and/or di-tri-tetra-methacrylates/acrylates.

19. Device according to at least one of the preceding claims,
**characterized therein,**
that the porous material consists of a countercomponent of a reactive adhesive.

20. Device according to at least one of the preceding claims,
**characterized therein,**
that the porous material consists of a reactive partner of a further component of the adhesive.

21. Device according to at least one of the preceding claims,
**characterized therein,**
that the porous material is impregnated with a single-component material, preferably cyanacrylate-based, and/or with a microencapsulated and/or radiation-hardened adhesive.

22. Device according to at least one of the preceding claims,
**characterized therein,**
that the porous material consists of a fabric-like material.

23. Device according to at least one of the preceding claims,
**characterized therein,**
that the porous material consists of materials with capillary action, such as e.g. hollow fibers.

24. Device according to at least one of the preceding claims,
**characterized therein,**
that the porous material consists of pressed materials, such as e.g. cellulose, glass fibers or other fibers.

25. A method for raising a hoof (22) of an animal, such as a cow, by fastening a block (24) to the hoof, **characterized by** the procedural steps:
- fastening a porous material of a desired flat extension to the block (24), the material having been provided with a first component of a hardening multi-component adhesive prior to or after fastening to the block,
- providing the material having the first component with at least a second component (30) of the adhesive,
- pressing the block with the material containing the components against the hoof (22) and
- hardening the adhesive for fixing the block to the hoof.

26. A method for raising a hoof (22) of an animal, such as a cow, by fastening a block (24) to the hoof, **characterized by** the procedural steps:
- fastening a porous material of a desired flat extension to the block (24), the material having been provided with a single-component adhesive material prior to or after fastening to the block,
- pressing the block with the material containing the adhesive material against the hoof (22) and
- hardening the adhesive for connecting the block to the hoof.

27. A method according to claim 25 or 26,
**characterized therein,**
that the hardening is accomplished and/or assisted by ultrasound, high-frequency radiation, electromagnetic radiation, such as light, and/or microwave radiation.

## Revendications

1. Accessoire pour rehausser un onglon (22) d'un animal tel que le boeuf, comportant un bloc (24) à fixer sur l'onglon, comme un bloc de bois, qui peut être relié à l'onglon par l'intermédiaire d'un moyen de liaison comme une colle mono ou multi-composants,
**caractérisé en ce qu'**
il est prévu, sur la surface côté onglon (26) du bloc (24), une matière poreuse dotée d'une colle réactive ou un composant d'une telle colle ou constituée d'une telle colle pour former un moyen de liaison entre le bloc (24) et l'onglon (22).

2. Accessoire selon revendication 1,
**caractérisé en ce que**
la matière poreuse est absorbante.

3. Accessoire selon revendication 1 ou 2,
**caractérisé en ce que**
la matière poreuse est durcissable.

4. Accessoire selon au moins l'une quelconque des revendications précédentes,
**caractérisé en ce que**
la matière poreuse est reliée au bloc (24).

5. Accessoire selon au moins l'une quelconque des revendications précédentes,
**caractérisé en ce que**
la matière poreuse est formée sur la surface côté onglon (26) du bloc (24).

6. Accessoire selon au moins l'une quelconque des revendications précédentes,
**caractérisé en ce que**
la matière poreuse est dotée comme imprégnée, comme un support (28), d'un composant d'une colle bi-composants ou multi-composants ou est constituée de celle-ci.

7. Accessoire selon au moins l'une quelconque des revendications précédentes,
**caractérisé en ce que**
la matière poreuse est dotée comme imprégnée d'une colle mono-composant, en particulier à base de cyanoacrylate ou est constituée de celle-ci.

8. Accessoire selon au moins l'une quelconque des revendications précédentes,
**caractérisé en ce que**
la matière poreuse est une mousse et/ou un plastifiant et/ou un textile ou contient l'un d'eux.

9. Accessoire selon au moins l'une quelconque des revendications précédentes,
**caractérisé en ce que**
la matière poreuse est formée par un coussin et/ou un tampon qui est rempli de matière poudreuse et/ou de type granulat imprégnée du composant de la colle bi-composants ou multi-composants ou est constituée de celui-ci.

10. Accessoire selon au moins l'une quelconque des revendications précédentes,
**caractérisé en ce que**
la matière poreuse présente un tracé qui recouvre la zone d'onglon souhaitée.

11. Accessoire selon au moins l'une quelconque des revendications précédentes,
**caractérisé en ce que**
la matière poreuse présente au moins dans certaines zones un logement pour des substances actives médicales.

12. Accessoire selon au moins l'une quelconque des revendications précédentes,
**caractérisé en ce que**
la matière poreuse est constituée d'une mousse à pores fermés et/ou ouverts.

13. Accessoire selon au moins l'une quelconque des revendications précédentes,
**caractérisé en ce que**
la matière poreuse constituée de mousse présente une épaisseur de 0,1 mm à 30 mm, de préférence de 3 mm à 10 mm.

14. Accessoire selon au moins l'une quelconque des revendications précédentes,
**caractérisé en ce que**
la mousse présente une taille de pores de 0,01 mm à 5 mm, de préférence de 0,1 mm à 2 mm.

15. Accessoire selon au moins l'une quelconque des revendications précédentes,
**caractérisé en ce que**
la colle est une colle bi-composants à base d'uréthane, d'acrylate/méthacrylate, de polyester, d'acide acrylique et/ou de résine époxy.

16. Accessoire selon au moins l'une quelconque des revendications précédentes,
**caractérisé en ce que**
la matière poreuse est imprégnée d'un peroxyde et/ou d'un acide barbiturique substitué, de préférence d'un péroxyde de dibenzoyle et/ou d'un acide barbiturique substitué en position 5.

17. Accessoire selon au moins l'une quelconque des revendications précédentes,
**caractérisé en ce que**
pour durcir la colle, le composant polymérisant à ajouter à la matière poreuse contient un accélérateur de réaction tels que des amines ou des sels d'ammonium quaternaires, des ions métalliques, de préférence des para-toluidines, des ions cuivre/cobalt et des chlorures d'ammonium quaternaires.

18. Accessoire selon au moins l'une quelconque des revendications précédentes,
**caractérisé en ce que**
le composant polymérisant est un monomère à base de polyester et/ou d'acrylate/méthacrylate, de préférence de styrène ou de méthacrylate de méthyle, d'éthyle, de n-alkyle et/ou de méthacrylate/d'acrylate d'hydroxy(-éthyle, propyle, n-alkyle) et/ou de di-tri-tétra- méthacrylates/acrylates.

19. Accessoire selon au moins l'une quelconque des revendications précédentes,
**caractérisé en ce que**
la matière poreuse est constituée d'un composant inverse d'une colle réactive.

20. Accessoire selon au moins l'une quelconque des revendications précédentes,
**caractérisé en ce que**
la matière poreuse est constituée d'un partenaire réactif d'un autre composant de la colle.

21. Accessoire selon au moins l'une quelconque des revendications précédentes,
**caractérisé en ce que**
la matière poreuse est imprégnée d'une matière mono-composant, de préférence à base de cyanoacrylate et/ou d'une colle micro-capsulée et/ou durcissante par radiation.

22. Accessoire selon au moins l'une quelconque des revendications précédentes,
**caractérisé en ce que**
la matière poreuse est constituée d'une matière similaire.

23. Accessoire selon au moins l'une quelconque des revendications précédentes,
**caractérisé en ce que**
la matière poreuse est constituée de matières à action capillaire comme, par exemple de fibres de bois.

24. Accessoire selon au moins l'une quelconque des revendications précédentes,
**caractérisé en ce que**
la matière poreuse est constituée de matières pressées comme, par exemple, de cellulose, de fibres de verre ou d'autres fibres.

25. Procédé pour rehausser un onglon (22) d'un animal tel que le boeuf, par fixation d'un bloc (24) sur l'onglon,
**caractérisé par** les étapes suivantes :
- fixation d'une matière poreuse d'une étendue plane souhaitée sur le bloc (24), la matière ayant été dotée, avant ou après la fixation sur le bloc, d'un premier composant d'une colle multi-composants durcissante,
- dotation de la matière présentant le premier composant d'un au moins deuxième composant (30) de la colle,
- pression du bloc avec la matière contenant le composant contre l'onglon (22) et
- durcissement de la colle pour relier le bloc à l'onglon.

26. Procédé pour rehausser un onglon (22) d'un animal tel que le boeuf, par fixation d'un bloc (24) sur l'onglon,
**caractérisé par** les étapes suivantes :
- fixation d'une matière poreuse d'une étendue plane souhaitée sur le bloc (24), la matière ayant été dotée, avant ou après la fixation sur le bloc, d'une colle mono-composant,
- pression du bloc avec la matière contenant le composant de colle contre l'onglon (22) et
- durcissement de la colle pour relier le bloc à l'onglon.

27. Procédé selon revendication 25 ou 26,
**caractérisé en ce que**
le durcissement est réalisé et/ou assisté par ultrasons, radiation haute fréquence, radiation électromagnétique comme la lumière et/ou rayonnement micro-ondes.
